# EUROPEAN PATENT APPLICATION

(11) **EP 4 640 532 A1**
(43) Date of publication of application: **29.10.2025**
(21) Application number: 25167985.8
(22) Date of filing: 02.04.2025
(51) Int. Cl.: B62D 25/20

(54) **VEHICLE-BODY STRUCTURE OF VEHICLE IN WHICH BATTERY UNIT IS MOUNTED**

(30) Priority: 26.04.2024 JP 2024072762
(71) Applicant: MAZDA MOTOR CORPORATION, Hiroshima 730-8670 (JP)
(72) Inventor: Nishimura, Yoshikazu, Aki-gun, Hiroshima, 730-8670 (JP); Yotsuyanagi, Taiki, Aki-gun, Hiroshima, 730-8670 (JP); Kawano, Akihiro, Aki-gun, Hiroshima, 730-8670 (JP); Fukuda, Ayaka, Aki-gun, Hiroshima, 730-8670 (JP)
(74) Representative: Müller-Boré & Partner Patentanwälte PartG mbB

(57) **Abstract**

A vehicle-body structure includes a torque box that has a closed cross-sectional structure formed by attaching a box panel to a lower surface of a front end part of a floor panel, the torque box coupling, in cooperation with the floor panel, a rear end part of each of front side frames on a left side and a right side to a front end part of each of side sills. A battery unit has an external appearance having a rectangular shape as viewed in a top plan view, and is disposed below the floor panel to expand along the floor panel. The torque box is received by a step part provided at a front end part of the battery unit, thus causing the front end part of the battery unit to be disposed to overlap with the torque box in an up-down direction.

## Description

### [Technical Field]

The disclosed technology relates to a vehicle-body structure of a vehicle in which a battery unit for traveling is mounted, such as an electric vehicle.

### [Background Art]

A front vehicle-body structure is disclosed in Patent Literature 1.

In the front vehicle-body structure of Patent Literature 1, a pair of left and right front side frames 14 are coupled to a cross member 18 extending in the vehicle width direction. The left and right end parts of the cross member 18 are coupled to a pair of left and right side sills 16 via outriggers 26.

Each outrigger 26 has an inclined surface 58 on the inner side in the vehicle width direction, the inclined surface 58 being inclined outward in the vehicle width direction toward the rear side. Inclined surfaces 56 are provided at the left and right front corner parts of a battery case 52. The inclined surfaces 56 and the inclined surfaces 58 of the respective outriggers 26 are disposed to face each other with a clearance therebetween.

### [Citation List]

### [Patent Literature]

[Patent Literature 1] Japanese Patent Laid-Open No. 2019-18821

### [Summary]

### [Problems to be Solved]

Battery units have large weights and large capacities. For this reason, a battery unit is generally disposed to expand below a floor panel having a large area.

However, there is a limitation on the height of the space formed below the floor panel. For this reason, it is desirable to increase the battery unit in size in the horizontal direction. Nevertheless, the front part of a vehicle body is provided with a pair of front side frames that receive a load acting from the front side of the vehicle.

To transmit the load to the pair of side sills disposed behind the front side frames, the vehicle-body structure of Patent Literature 1 is provided with the cross member and the pair of outriggers. Due to such a configuration, the battery unit of Patent Literature 1 is shaped such that the left and right front corner parts of the battery unit are cut off as viewed from above. The vehicle-body structure of Patent Literature 1 has a disadvantage that the capacity of the battery unit is correspondingly reduced.

In contrast, there may be cases in which a load on respective front side frames is transmitted to the respective side sills via torque boxes having a closed cross-sectional structure excellent in strength and rigidity. To allow the torque boxes to appropriately transmit the load, it is necessary to constitute the torque boxes having an appropriate volume and having a small deviation in aspect ratio (the ratio of longitudinal size to lateral size) of the closed cross-section.

When the battery unit is increased in size in the forward direction, the battery unit interferes with the torque box. Accordingly, also in this case, there is no choice but to dispose the battery unit while avoiding the torque boxes in the same manner as the vehicle-body structure of Patent Literature 1. The capacity of the battery unit is reduced.

In view of the above, this description discloses a technique that can increase the capacity of a battery unit by increasing the battery unit in size in the forward direction while the function of torque boxes is appropriately ensured.

### [Means for Solving the Problems]

The invention relates to a vehicle-body structure of a vehicle, as defined in claim 1.

Particularly, the vehicle-body structure, or a front vehicle-body structure includes: a floor panel that constitutes a floor surface of a vehicle cabin of the vehicle; a pair of side sills that extend in a front-rear direction along both left and right side edges of the floor panel; a pair of front side frames that extend forward from a front side of the floor panel while being spaced apart from each other in a left-right direction; and a torque box that has a closed cross-sectional structure formed by attaching a box panel to a lower surface of a front end part of the floor panel, the torque box coupling, in cooperation with the floor panel, a rear end part of each of the pair of front side frames on a left side and a right side to a front end part of each of the pair of side sills.

The battery unit has an external appearance having a rectangular shape as viewed in a top plan view, and is disposed below the floor panel to expand along the floor panel. A step part having a lower height than an upper surface of the battery unit is provided at a front end part of the battery unit, and the torque box is received by the step part, thus causing the front end part of the battery unit to be disposed to overlap with the torque box in an up-down direction.

That is, according to this vehicle-body structure, by attaching the box panel to the lower surface of the front end part of the floor panel, the torque box having the closed cross-sectional structure is formed. The torque box couples, in cooperation with the floor panel, the rear end part of each of the front side frames on the left side and the right side to the front end part of each of the side sills.

The battery unit disposed below the floor panel to expand along the floor panel has the external appearance having a rectangular shape as viewed in a top plan view. The step part having a lower height than the upper surface of the battery unit is provided at the front end part of the battery unit, and the torque box is received by the step part, thus causing the front end part of the battery unit to be disposed to overlap with the torque box in the up-down direction.

Therefore, it is possible to allow the battery unit to be formed into a rectangular shape having substantially the same size as the floor panel. The battery unit can be increased in size in the forward direction while the function of the torque box is ensured and hence it is possible to achieve a battery unit having a large capacity.

The torque box may include a front wall part facing in a forward direction, a rear wall part facing in a rearward direction, and a lower wall part facing in a downward direction, and the step part may be formed to extend along the lower wall part and the rear wall part.

With such a configuration, it is possible to maximize the capacity of the front end part of the battery unit while an appropriate closed cross-sectional shape of the torque box is ensured.

The torque box may further include a side wall part that faces in a lateral direction, and the torque box may be joined to the front end part of each of the pair of side sills from a plurality of directions.

With such a configuration, a load that acts on the torque box can be appropriately transmitted to the side sill with certainty.

The rear end part of each of the pair of front side frames may be joined to the torque box via the front wall part.

With such a configuration, the torque box receives, from the front side thereof, a load transmitted rearward from the front side frame and hence it is possible to appropriately transmit the load that acts on the front side frame to the torque box with certainty.

The battery unit may include a battery case that houses a battery cell, the battery case may include a frame member having a rectangular shape, and a bottom member and a lid member that are assembled to the frame member to cover an upper side and a lower side of the battery cell, the step part may be constituted of the frame member and the lid member, the frame member facing the lower wall part, the lid member facing the rear wall part, and the frame member may be fixed to the lower wall part.

With such a configuration, the battery unit is supported by the torque box, which is also excellent in strength and rigidity, via the frame member excellent in strength and rigidity and hence it is possible to support the battery unit in a stable manner.

A lower surface of the floor panel including the torque box and an upper surface of the battery case including the frame member and the lid member may face each other with a predetermined gap therebetween.

The battery unit radiates heat when in use. When there is a gap between the floor panel or the like and the upper surface of the battery case, it is possible to secure a heat radiation space having a large surface area above the battery unit. It is possible to promote heat radiation of the battery unit.

### [Advantageous Effects of Invention]

According to the invention, it is possible to increase the capacity of the battery unit by increasing the battery unit in size in the forward direction while the function of the torque box is appropriately ensured.

### [Brief Description of Drawings]

FIG. 1 is a diagram of a vehicle-body structure to which the disclosed technology is applied, as viewed from above.
FIG. 2 is a perspective view as viewed from a direction shown by arrow A in FIG. 1.
FIG. 3 is a cross-sectional view taken along arrow line B-B in FIG. 1.
FIG. 4 is a cross-sectional view taken along arrow line D-D in FIG. 3.
FIG. 5 is a diagram as viewed from a direction shown by arrow E in FIG. 4.
FIG. 6 is a cross-sectional view taken along arrow line C-C in FIG. 1.
FIG. 7A is a diagram for illustrating the structure of a battery unit.
FIG. 7B is a diagram for illustrating the structure of the battery unit.
FIG. 8 is a diagram for illustrating the structure of a box panel.
FIG. 9 is a perspective view showing a state in which the box panel is attached to a vehicle body.

### [Mode for Carrying out the Invention]

Hereinafter, the disclosed technology will be described. However, this description is merely exemplary in nature. The front-rear direction, the left-right direction, and the up-down direction used in the description are determined with reference to a vehicle. In the drawings, these directions are shown by arrows. The left-right direction corresponds to a vehicle width direction.

### <Vehicle-body structure>

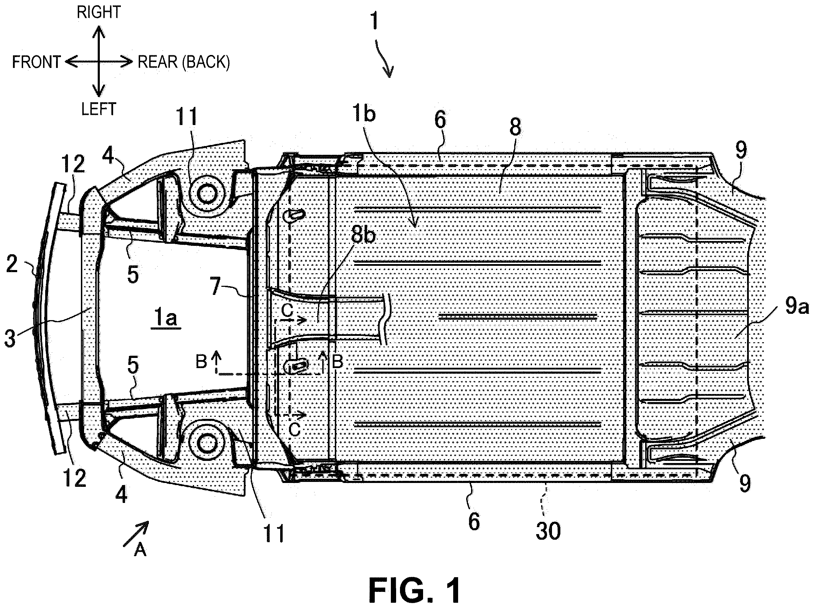

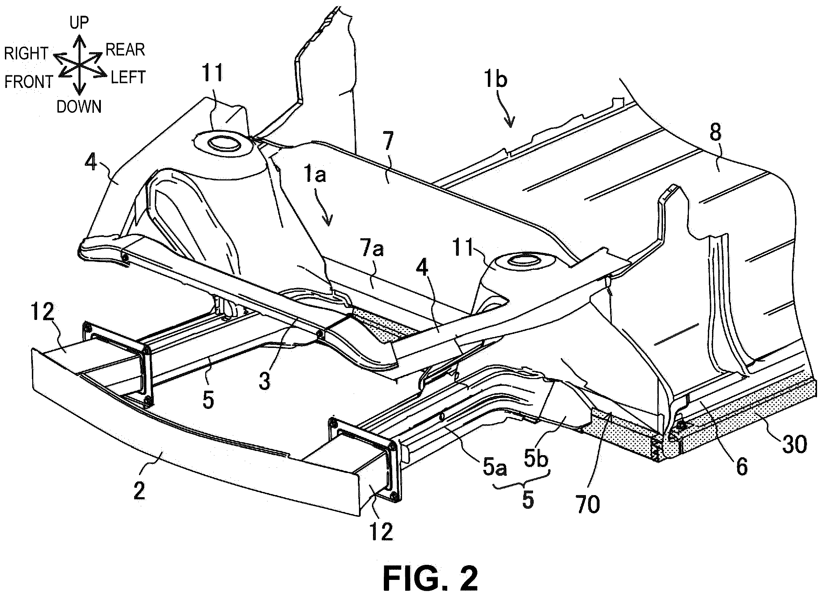

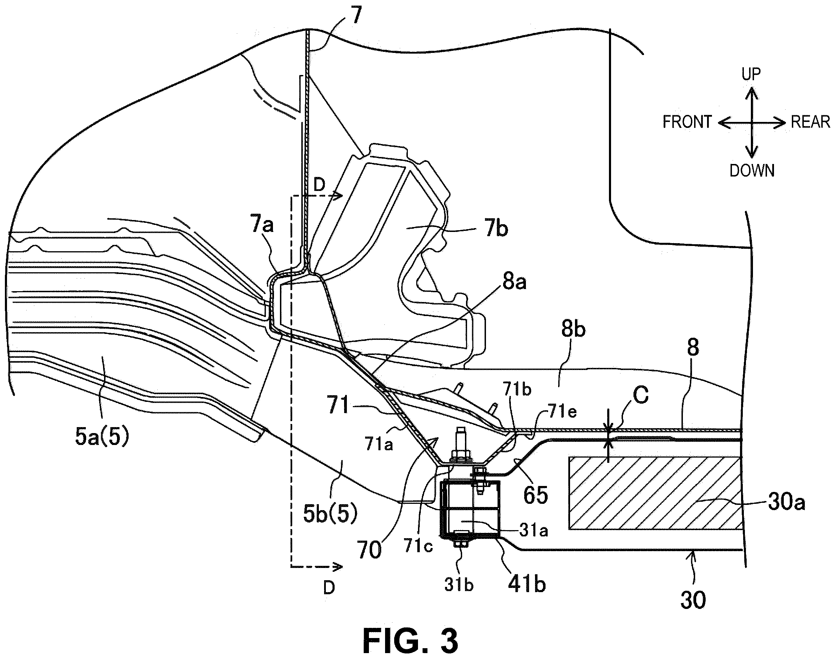

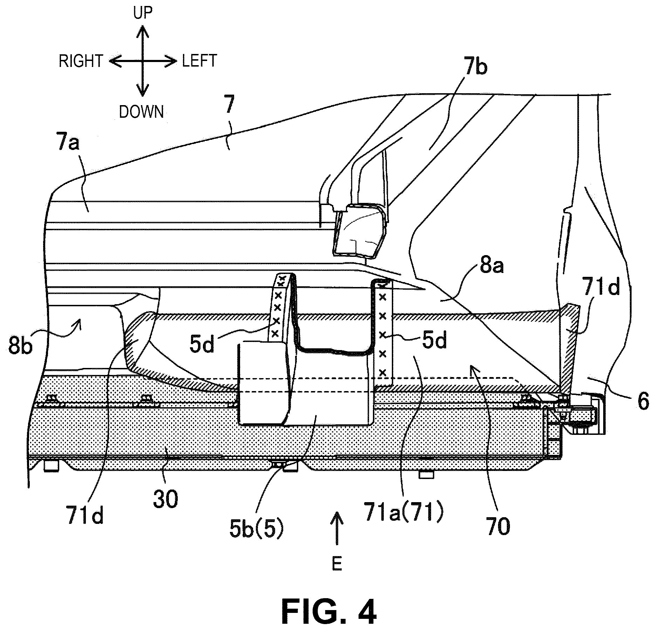

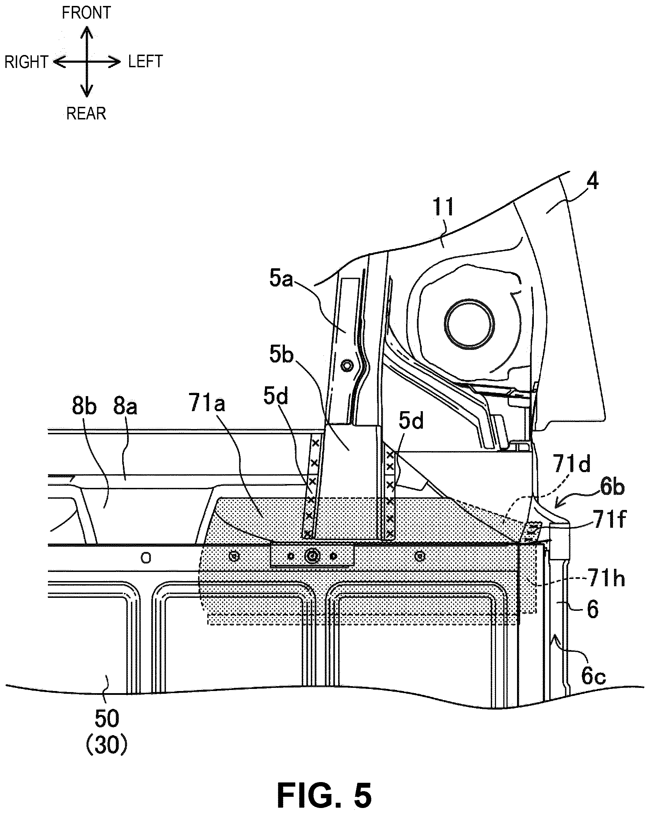

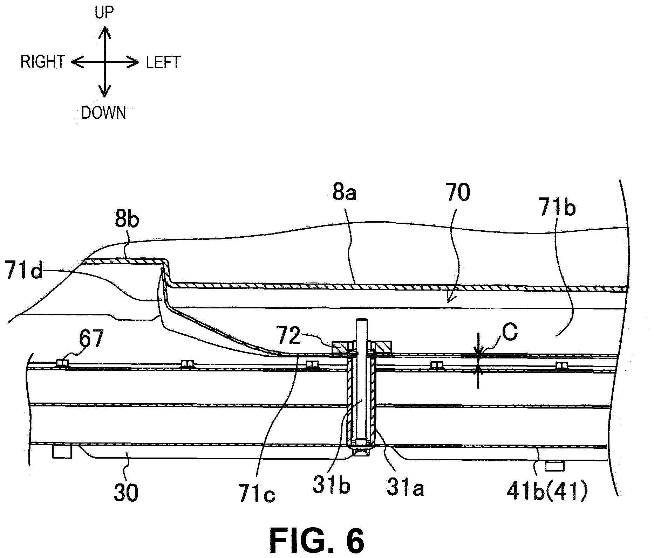

The vehicle-body structure of a vehicle to which the invention is applied is shown in FIG. 1 to FIG. 6 as an example. FIG. 1 is a diagram of a vehicle body 1 of the vehicle as viewed from above (plan view). FIG. 2 is a perspective view as viewed from a direction shown by arrow A in FIG. 1. FIG. 3 is a cross-sectional view taken along arrow line B-B in FIG. 1. FIG. 4 is a cross-sectional view taken along arrow line D-D in FIG. 3. FIG. 5 is a diagram as viewed from a direction shown by arrow E in FIG. 4 (bottom view). FIG. 6 is a cross-sectional view taken along arrow line C-C in FIG. 1. The vehicle body 1 is shown in FIG. 1 to FIG. 6 in a simplified manner.

For example, the vehicle body 1 is constituted of a bumper beam 2, a shroud upper member 3, apron members 4, front side frames 5, side sills 6, a dash panel 7, a floor panel 8, and the like.

This vehicle may be an electric vehicle. This vehicle travels by driving a motor, particularly an electric motor. Although not shown in the drawing, the motor may be mounted in a front space 1a provided at the front part of the vehicle body 1. For example, a vehicle cabin 1b is formed at the intermediate part of the vehicle body 1. The floor panel 8 having a substantially rectangular shape as viewed in a top plan view is laid at the intermediate part of the vehicle body 1 in such a way as to expand in both the front-rear direction and the left-right direction (in the horizontal direction). The floor panel 8 may constitute the floor surface of the vehicle cabin 1b.

A battery unit 30 is mounted in the vehicle e.g., as a power source for driving a motor for traveling. The battery unit 30 is required to have a high output. For this reason, the battery unit 30 may have a heavy weight and a large capacity. However, an installation space in the vehicle has limitations. Thus, as shown by a broken line in FIG. 1, the battery unit 30 is disposed below the floor panel 8 in such a way as to expand along the floor panel 8.

The battery unit 30 of the vehicle has an external appearance having a rectangular shape as viewed in a top plan view, which is substantially the same as that of the floor panel 8. Particularly, the front end part of the battery unit 30 is located in the vicinity of the front edge of the floor panel 8. The left and right front corner parts of the battery unit 30 overlap with the left and right front corner parts of the floor panel 8 in the up-down direction. The battery unit 30 will be separately described later.

As shown in FIG. 2, partitioning may be provided between the front space 1a and the vehicle cabin 1b by the dash panel 7 expanding in both the up-down direction and the left-right direction (the vertical direction). As shown in FIG. 3, an upward inclined surface part 8a may be provided at the front end part of the floor panel 8, the upward inclined surface part 8a being inclined upward toward the front side or the front side of the vehicle.

The protruding end of the upward inclined surface part 8a is coupled to the lower end of the dash panel 7. The dash panel 7 and the floor panel 8 may be formed in an integral body by joining a plurality of steel sheets to which press working is performed. A ridge part 7a may be provided in the lower end part of the dash panel 7, the ridge part 7a extending in the left-right direction in a state of protruding forward.

A reinforcement rib 7b having a closed cross-sectional structure may be provided behind the ridge part 7a. A bulging part 8b may be formed at the center portion in the left-right direction of the front end part of the floor panel 8, the bulging part 8b extending in a band shape toward the rear side in a state of being raised and bulging upward. For example, torque boxes 70 (the details will be described later) are attached to the lower surface of the floor panel 8 at positions on both left and right sides of the bulging part 8b by utilizing the upward inclined surface part 8a.

The pair of side sills 6, 6 excellent in strength and rigidity are provided on both left and right sides of the intermediate part of the vehicle body 1. Each side sill 6 may be formed of a columnar member, and the side sills 6 extend in parallel in the front-rear direction along both left and right side edges of the floor panel 8.

For example, rear side frames 9 extending rearward are coupled to the rear ends of the respective side sills 6. A rear floor panel 9a formed continuously with the floor panel 8 may be laid between these rear side frames 9, 9.

As shown in FIG. 1, FIG. 2, FIG. 3 and others, a pair of front side frames 5, 5 extend forward from the front side of the floor panel 8 while being spaced apart from each other in the left-right direction. Each front side frame 5 may be formed of a columnar member having a rectangular cross section, and may include a main part 5a and a rear end part 5b, the main part 5a extending substantially horizontally, the rear end part 5b extending shortly downward in an inclined manner from the rear end of the main part 5a.

For example, each front side frame 5 is joined to the upward inclined surface part 8a of the floor panel 8 and to the torque box 70 via the rear end part 5b. As shown in FIG. 1 and FIG. 2, in the left-right direction, joined portions of the rear end parts 5b may be located at intermediate positions between the center and the left and right side ends of the vehicle body 1. As viewed from the up-down direction, the pair of front side frames 5, 5 are disposed in a slightly inclined manner in such a way as to increase a distance therebetween as going to the front side.

Suspension housings 11 may be provided in front of the left and right end parts of the dash panel 7. The lower end parts of the respective suspension housings 11 are coupled to the respective front side frames 5. The apron members 4 are coupled to the upper end parts of the respective suspension housings 11.

Each apron member 4 may extend forward from the outer side of each suspension housing 11. Each apron member 4 bends more inward in the vehicle width direction as it goes to the front side. The distal ends of the pair of apron members 4, 4 are coupled to each other by the shroud upper member 3 extending in the left-right direction.

The bumper beam 2 extending in the left-right direction may be disposed at a position lower than and in front of the shroud upper member 3. The front ends of the respective front side frames 5 are coupled to both end parts of this bumper beam 2 via crush cans 12.

### <Battery unit>

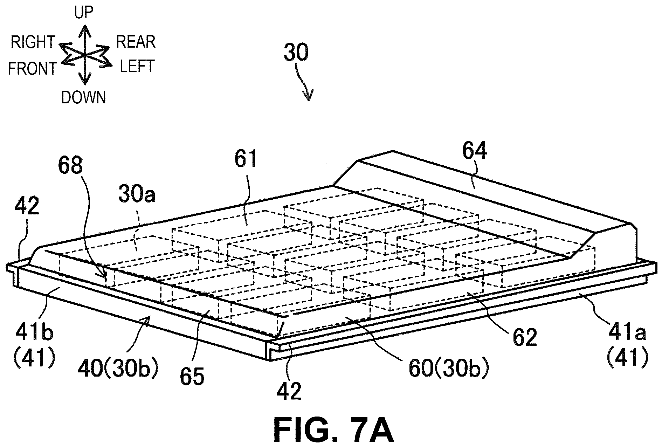

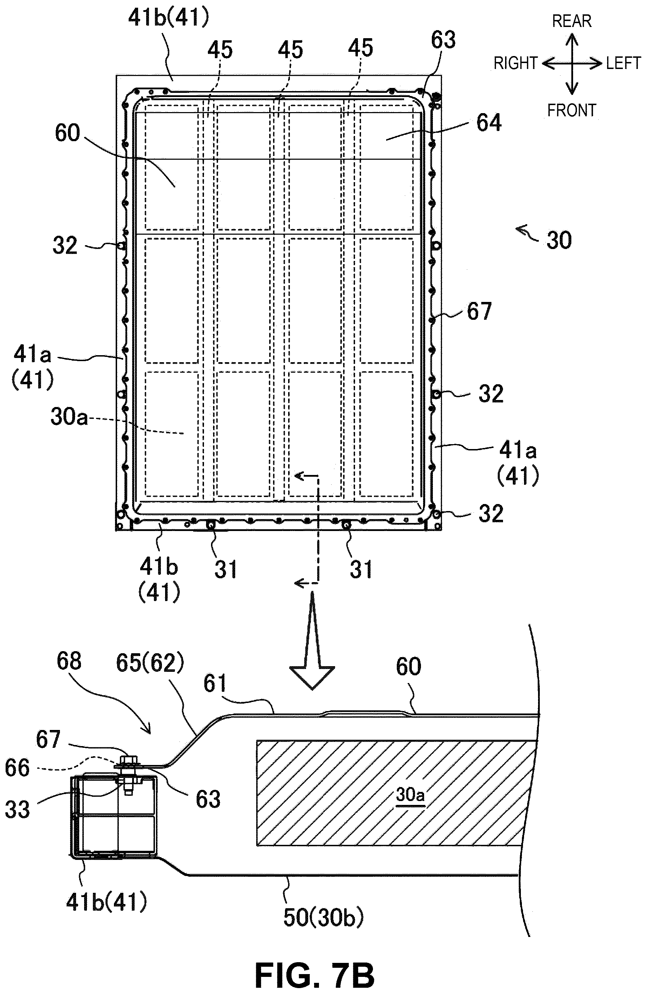

The structure of the battery unit 30 is shown in FIG. 7A and FIG. 7B as an example. For example, the battery unit 30 includes a plurality of battery cells 30a, and a battery case 30b that houses these battery cells 30a.

The respective battery cells 30a are constituted by connecting a large number of batteries, e.g., lithium ion batteries, or the like. All the battery cells 30a are electrically connected with each other and configured to be able to output a predetermined voltage or high voltage. By taking into account loading efficiency in the battery case 30b, the battery cells 30a are each formed in a rectangular block shape (rectangular parallelepiped shape). In the case of this battery unit 30, e.g., twelve battery cells 30a are disposed in the battery case 30b to be arranged in the proximity of each other in the horizontal direction such that four battery cells 30a are arranged in the left-right direction and three battery cells 30a are arranged in the front-rear direction.

For example, the battery case 30b includes a battery frame 40, a bottom member 50, a lid member 60, and the like. The battery frame 40 includes a frame member 41 formed in a rectangular shape, and/or a plurality of reinforcement members 45. Each of the frame member 41 and the reinforcement members 45 may be a square pipe having a predetermined cross-sectional shape. These members are formed e.g., by extrusion molding of aluminum.

The frame member 41 includes a pair of first frame members 41a, 41a facing each other in the left-right direction, and a pair of second frame members 41b, 41b facing each other in the front-rear direction. Each second frame member 41b may have a partitioned cross section having a rectangular shape.

For example, a front fastening part 31 (the detail will be described later) for fastening to the torque box 70 is provided at the second frame member 41b on the front side (also referred to as "front second frame member 41b"), particularly at two predetermined bilaterally symmetrical positions.

For example, each first frame member 41a has a partitioned cross section having an inverted L-shaped, and/or a support part 42 projecting outward is provided in the upper part of the first frame member 41a. A side fastening part 32 for fastening to the side sill 6 may be provided in the support part 42 at a plurality of positions spaced apart from each other in the long-length direction. As shown in FIG. 7B in an enlarged manner, screwing parts 33 for screwing the lid member 60 may be provided in the frame member 41 at a plurality of positions.

The reinforcement member 45 may also have a partitioned cross section having a rectangular shape. In the case of this battery unit 30, three reinforcement members 45 are provided. The respective reinforcement members 45 extend between the pair of first frame members 41a, 41a in a state of being parallel to the pair of first frame members 41a, 41a. The respective reinforcement members 45 are installed between the front and rear second frame members 41b, 41b in such a way as to pass through between the battery cells 30a.

Each of the bottom member 50 and the lid member 60 may be a member formed by press working on an aluminum plate material. The bottom member 50 is joined (or welded) to the lower surface of the frame member 41 in such a way as to cover the lower side of the battery cells 30a. The lid member 60 that covers the upper side of the battery cells 30a may be fastened to the upper surface of the frame member 41.

The lid member 60 may have an external appearance having a tray shape with an opening thereof directed downward. For example, the lid member 60 includes an upper surface part 61, a side surface part 62, and a flange surface part 63, the upper surface part 61 having a rectangular shape as viewed from above, the side surface part 62 having a frame shape and having the upper edge thereof formed continuously with the peripheral edge of the upper surface part 61, the flange surface part 63 projecting from the lower edge of the side surface part 62 to an area around it.

A platform-shaped part 64 may be formed at the rear part of the lid member 60, the platform-shaped part 64 extending along the rear edge of the lid member 60, and having the upper surface part 61 located at a raised position. Electric members, such as a power input/output device and a control device that controls the battery unit 30, may be housed in this platform-shaped part 64.

The side surface parts 62 facing in the left-right direction may be formed to be suspended from the upper surface part 61. The side surface part 62 facing in the forward direction (also referred to as "downward inclined surface part 65") may be formed to be downwardly inclined toward the front side (or the front side of the vehicle).

For example, the flange surface part 63 has fastening holes 66 for screwing at a plurality of positions corresponding to the arrangement of the screwing parts 33 of the frame member 41. By fastening a screw 67 inserted through each fastening hole 66 to the screwing part 33, the lid member 60 is detachably attached to the frame member 41.

For example, by attaching the lid member 60 to the frame member 41, a step part 68 is formed at the front end part of the battery unit 30, the step part 68 having a height lower than the height of the upper surface (or the top surface) of the battery unit 30, that is, the upper surface part 61. In other words, the position of the step part 68 in the up-down direction is lower than the position of the upper surface of the battery unit 30 in the up-down direction.

For example, a step-shaped part having a height lower than the height of the upper surface part 61 is formed by the upper surface of the front second frame member 41b and the outer surface of the downward inclined surface part 65 in such a way as to extend in the left-right direction along the front edge of the battery unit 30.

In this vehicle-body structure of the vehicle, the torque boxes 70 are received into this step part 68, such that the front end part of the battery unit 30 and the torque boxes 70 are disposed to overlap with each other in the up-down direction. Therefore, it is possible to form the battery unit 30 into a rectangular shape having a size substantially equal to the size of the floor panel 8 having a rectangular shape as viewed in a top plan view. It is possible to enlarge the battery unit 30 in the forward direction while ensuring the function of the torque boxes 70 and hence, it is possible to achieve the battery unit 30 having a large capacity.

### <Torque box and parts of vehicle-body structure related to torque box>

When a load acts on the vehicle from the front side due to a collision or the like, the bumper beam 2 receives the load. Most of the load received by the bumper beam 2 is transmitted rearward via the left and right crush cans 12, 12 and the pair of front side frames 5, 5.

The torque boxes 70 couple the rear end parts 5b of the left and right front side frame 5, 5 to the front end parts of the side sills 6. Therefore, the torque boxes 70 transmit a load that acts on the pair of front side frames 5, 5 to the pair of side sills 6, 6.

To appropriately transmit a load, it is preferable or necessary for the torque boxes 70 to satisfy predetermined strength and rigidity. In this vehicle body 1, the torque boxes 70 having a closed cross-sectional structure excellent in strength and rigidity are formed by attaching box panels 71 e.g., having a specific shape to the lower surface of the front end part of the floor panel 8. These torque boxes 70 couple the rear end parts 5b of the left and right front side frames 5 to the front end parts of the side sills 6 in cooperation with the floor panel 8.

The vehicle body 1 includes one or more, particularly two box panels 71. These box panels 71 may be formed in a bilaterally symmetrical shape. The left and right box panels 71, 71 are joined and attached to the lower surfaces of the left and right portions of the front end part of the floor panel 8.

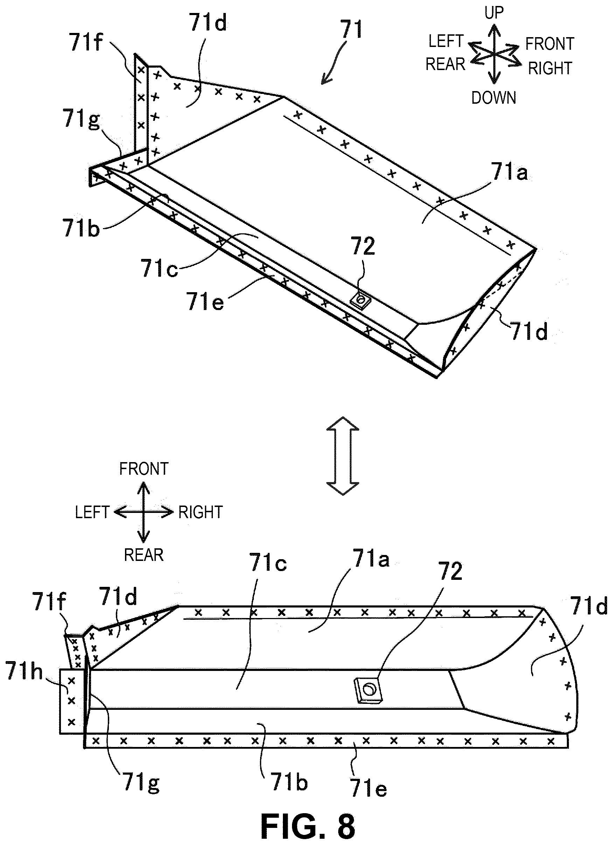

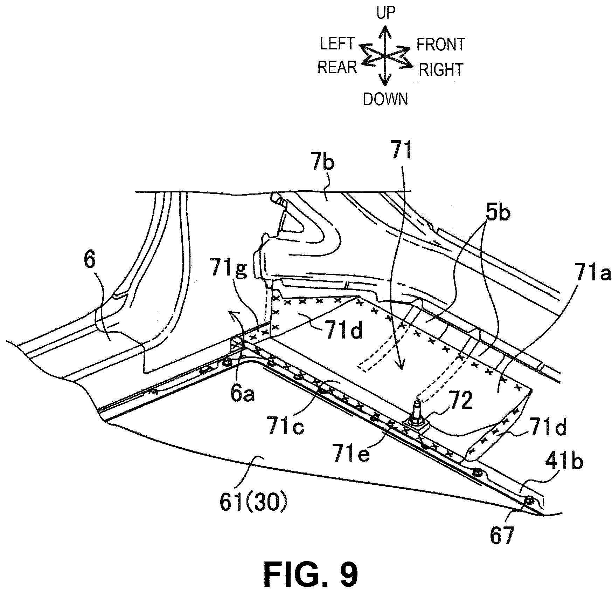

FIG. 8 shows the box panel 71 on the left side as an example. FIG. 9 is a perspective view showing a state in which the box panel 71 is attached to the vehicle body 1. FIG. 9 shows the box panel 71 as viewed from an obliquely right rear position, with the floor panel 8 detached. In the drawing, joined portions are shown by a plurality of cross marks. Although joining is generally performed e.g.**,** by spot welding, the cross marks do not represent the positions or the number of joined portions.

For example, the box panel 71 is a pressed product made of a steel sheet. The box panel 71 may include a front wall part 71a facing in the forward direction, a rear wall part 71b facing in the rearward direction, a lower wall part 71c facing in the downward direction, a pair of side wall parts 71d, 71d facing in the lateral direction, and the like (of the side wall parts 71d, a side wall part 71d facing outward in the vehicle width direction may be referred to as "outer side wall part 71d", and a side wall part 71d facing inward in the vehicle width direction may be referred to as "inner side wall part 71d").

The rear wall part 71b may include a first flange part 71e that projects along the upper edge part of the rear wall part 71b. The outer side wall part 71d may include a second flange part 71f, a third flange part 71g, and/or a fourth flange part 71h, the second flange part 71f projecting along the rear edge part of the outer side wall part 71d, the third flange part 71g projecting from the lower end part of the outer side wall part 71d along the lower wall part 71c and the rear wall part 71b, the fourth flange part 71h projecting from the lower end of the second flange part 71f along the third flange part 71g.

For example, the inner side wall part 71d is formed in such a way as to overlap with the side surface shape of the bulging part 8b of the floor panel 8. As shown in FIG. 4 and FIG. 6, the inner side wall part 71d is joined in a state of overlapping with the side surface of the bulging part 8b.

For example, the lower wall part 71c is formed in a band shape that faces the upper surface of the front second frame member 41b of the battery unit 30. As shown in FIG. 3 and FIG. 6, the lower wall part 71c is configured to extend outward in the vehicle width direction substantially horizontally from a portion at which the bulging part 8b is formed at the front end part of the floor panel 8. The lower wall part 71c may be provided with a fastening seat 72 for fastening a bolt.

For example, the front wall part 71a and the rear wall part 71b are inclined upward from the long side parts of the lower wall part 71c. The inclination of the front wall part 71a is formed in conformity with the inclination of the upward inclined surface part 8a at the front end part of the floor panel 8. As shown in FIG. 3 and FIG. 4, the front wall part 71a may be joined in a state of overlapping with the upward inclined surface part 8a**.**

For example, the inclination of the rear wall part 71b is formed in conformity with the inclination of the downward inclined surface part 65 at the front end part of the battery unit 30. As shown in FIG. 3, the rear wall part 71b may be joined with the first flange part 71e of the rear wall part 71b overlapping with the lower surface of the floor panel 8.

For example, the outer side wall part 71d is formed in a triangular shape that is inclined upward from the inclined outer edge of the front wall part 71a. As shown in FIG. 4, FIG. 5, and FIG. 9, the end part of the torque box 70 on the outer side in the vehicle width direction may be joined to the front end part of the side sill 6 from a plurality of directions via the edge part of the outer side wall part 71d and second to fourth flange parts 71f to 71h.

Particularly, as shown in FIG. 9, the edge part of the outer side wall part 71d and the third flange part 71g are joined to an inner surface 6a of the side sill 6. As shown in FIG. 5, the second flange part 71f is joined to a front end surface 6b of the side sill 6. The fourth flange part 71h is joined to a lower surface 6c of the side sill 6. The torque box 70 is thus firmly coupled to the front end part of the side sill 6.

Each torque box 70 may have a relatively long dimension in the left-right direction along the front end part of the floor panel 8, and has a closed cross-sectional structure having e.g., a substantially triangular cross section with a relatively small deviation in aspect ratio as viewed from the left-right direction. Accordingly, these torque boxes 70 are excellent in strength and rigidity.

As described above, each front side frame 5 is joined to the upward inclined surface part 8a of the floor panel 8 and to the torque box 70 via the rear end part 5b of the front side frame 5. For example, as shown in FIG. 3, FIG. 4, and FIG. 5, the rear end part 5b of each front side frame 5 includes a frame joint part that is formed in conformity with the shapes of the upward inclined surface part 8a and of the front wall part 71a of the torque box 70.

The frame joint part may be provided with joint flange parts 5d that are brought into surface contact with the upward inclined surface part 8a and the front wall part 71a. By joining the joint flange parts 5d to the front surfaces of the upward inclined surface part 8a and the front wall part 71a, each front side frame 5 is coupled to the floor panel 8 and the torque box 70.

That is, the respective torque boxes 70 having a closed cross-sectional structure excellent in strength and rigidity couple the rear end parts 5b of the left and right front side frames 5 to the front end parts of the side sills 6 in cooperation with the floor panel 8. Accordingly, when a load acts on the respective front side frames 5 from the front side, it is possible to effectively transmit the load to the respective torque boxes 70. Further, it is possible to effectively transmit the load that acts on the respective torque boxes 70 to the respective side sills 6. The torque boxes 70 are allowed to sufficiently exhibit their functions.

As shown in FIG. 7B, the step part 68 is provided at the front end part of the battery unit 30. As shown in FIG. 3, the step part 68 is formed to extend along the lower wall parts 71c and/or the rear wall parts 71b of the respective torque boxes 70. Therefore, the front end part of the battery unit 30 and the respective torque boxes 70 are disposed to overlap with each other in the up-down direction with a slight clearance C therebetween. Thus, the battery unit 30 has a rectangular shape having substantially the same size as the floor panel 8 as viewed from above. As a result, the battery unit 30 is supported by the pair of torque boxes 70, 70 and the pair of side sills 6, 6, which are excellent in strength and rigidity.

For example, as shown in FIG. 3 and FIG. 6, a bolt support pipe 31a is attached to each front fastening part 31, the bolt support pipe 31a penetrating through the front second frame member 41b in the up-down direction. The upper end part of the bolt support pipe 31a may protrude from the upper surface of the front second frame member 41b. A bolt 31b inserted through the bolt support pipe 31a is fastened and/or fixed to the fastening seat 72 of the lower wall part 71c of each torque box 70.

Although not shown in the drawing, the respective side fastening parts 32 provided at the support parts 42 of the first frame members 41a may be constituted in the same manner as the front fastening parts 31. That is, bolts inserted through the bolt support pipes of the respective side fastening parts 32 may be fastened and fixed to the respective side sills 6. Thus, the lower surface of the floor panel 8, including the torque boxes 70, faces the upper surface of the battery case 30b, including the frame member 41 and the lid member 60, with a predetermined gap (clearance C) therebetween.

The step part 68 of the battery unit 30 may be formed to extend along the lower wall parts 71c and the rear wall parts 71b of the torque boxes 70. Accordingly, it is possible to increase the capacity of the battery case 30b to the maximum. For example, the material of the battery case 30b is aluminum, whereas the material of the floor panel 8 and the torque boxes 70 is a steel sheet. As the materials have different thermal expansion coefficients, if the battery case 30b is brought into close contact with the floor panel 8 or the like, there is a possibility that these components are distorted or deformed.

However, by providing a predetermined clearance C between these components, it is possible to prevent such a problem. Further, the battery unit 30 radiates heat when in use. There may be cases in which the battery unit 30 is at a high temperature. By providing the clearance C between the floor panel 8 or the like and the battery case 30b, a heat radiation space having a large surface area can be secured above the battery unit 30.

As described above, according to the front vehicle-body structure of the vehicle of an embodiment of the present invention, it is possible to increase the capacity of the battery unit by increasing the battery unit in size in the forward direction while the function of the torque boxes is ensured.

The present invention is not limited to the embodiments described above, and also includes various other configurations. For example, although an electric vehicle is taken as an example of the vehicle in the embodiments, the vehicle may be a hybrid vehicle. The detailed shapes of the vehicle-body structure, including the box panels 71, and the battery unit 30 may be suitably changed depending on specifications provided that such a change does not affect the application of the disclosed technology.

### [Reference Signs List]

- 1: vehicle body
- 2: bumper beam
- 3: shroud upper member
- 4: apron member
- 5: front side frame
5b rear end part
- 6: side sill
- 7: dash panel
- 8: floor panel
8a upward inclined surface part
8b bulging part
- 11: suspension housing
- 12: crush can
- 13: coupling plate
- 30: battery unit
30a battery cell
30b battery case
- 40: battery frame
- 41: frame member
41a first frame member
41b second frame member
- 42: support part
- 45: reinforcement member
- 50: bottom member
- 60: lid member
- 61: upper surface part
- 62: side surface part
- 63: flange surface part
- 64: platform-shaped part
- 65: downward inclined surface part
- 68: step part
- 70: torque box
- 71: box panel
71a front wall part
71b rear wall part
71c lower wall part
71d side wall part
- 72: fastening seat

## Claims

1. A vehicle-body structure of a vehicle in which a battery unit (30) is mounted, the front vehicle-body structure comprising:
the battery unit (30);
a floor panel (8) that constitutes a floor surface of a vehicle cabin (1b) of the vehicle;
a pair of side sills (6) that extend in a front-rear direction along both left and right side edges of the floor panel (8);
a pair of front side frames (5) that extend forward from a front side of the floor panel (8) while being spaced apart from each other in a left-right direction; and
a torque box (70) that has a closed cross-sectional structure formed by attaching a box panel (71) to a lower surface of a front end part of the floor panel (8), the torque box (70) coupling, in cooperation with the floor panel (8), a rear end part of each of the pair of front side frames (5) on a left side and a right side to a front end part of each of the pair of side sills (6), wherein
the battery unit (30) has an external appearance having a rectangular shape as viewed in a top plan view, and is disposed below the floor panel (8) to expand along the floor panel (8),
the battery unit (30) has a step part (68) having a lower height than an upper surface of the battery unit (30),
the step part (68) is provided at a front end part of the battery unit (30), and
the torque box (70) is received by the step part (68), thus causing the front end part of the battery unit (30) to be disposed to overlap with the torque box (70) in an up-down direction.

2. The vehicle-body structure according to claim 1, wherein
the torque box (70) includes a front wall part (71a) facing in a forward direction, a rear wall part (71b) facing in a rearward direction, and a lower wall part (71c) facing in a downward direction, and
the step part (68) is formed to extend along the lower wall part (71c) and/or the rear wall part (71b).

3. The vehicle-body structure according to claim 1 or 2, wherein
the torque box (70) includes a side wall part (71b) that faces in a lateral direction, and
the torque box (70) is joined to the front end part of each of the pair of side sills (6) from a plurality of directions.

4. The front vehicle-body structure according to claim 2 or claim 3 referring to claim 2, wherein
the rear end part of each of the pair of front side frames (5) is joined to the torque box (70) via the front wall part (71a).

5. The vehicle-body structure according to any one of the preceding claims referring to claim 2, wherein
the battery unit (30) includes a battery case (30b) that houses a battery cell (30a),
the battery case (30b) includes a frame member (41) having a rectangular shape, and a bottom member (50) and a lid member (60) that are assembled to the frame member (41) to cover an upper side and a lower side of the battery cell (30a),
the step part (68) is constituted of the frame member (41) and the lid member (60), the frame member (41) facing the lower wall part (71c), the lid member (60) facing the rear wall part (71b), and
the frame member (41) is fixed to the lower wall part (71c).

6. The vehicle-body structure according to claim 5, wherein
a lower surface of the floor panel (8) including the torque box (70) and an upper surface of the battery case (30b) including the frame member (41) and the lid member (60) face each other with a predetermined gap therebetween.

7. The vehicle-body structure according to claim 5 or 6, wherein
the lid member (60) has an inclined surface part (65) facing in the forward direction and formed to be inclined, and
the step part (68) is formed by the inclined surface part (65) and the frame member (41).

8. The vehicle-body structure according to claim 7, wherein
the inclined surface part (62, 65) is downwardly inclined toward a front side of the vehicle.

9. The vehicle-body structure according to claim 7 or 8, wherein
the step part (68) is formed by an outer surface of the inclined surface part (65) and an upper surface of the frame member (41).

10. The vehicle-body structure according to claim 9, wherein
the frame member (41) has a fastening part (31),
the front vehicle-body structure further comprises a bolt support pipe (31a) attached to the front fastening part (31),
the bolt support pipe (31a) protrudes from the upper surface of the frame member (41), and
the front vehicle-body structure further comprises a bolt (31b) inserted through the bolt support pipe (31a),
the bolt (31b) is fastened and/or fixed to the torque box (70).

11. The vehicle-body structure according to any one of claims 5 to 10, wherein
the lid member (60) is attached to the frame member (41).

12. The vehicle-body structure according to any one of the preceding claims, wherein
the floor panel (8) has an inclined surface part (8a), and
the box panel (71) is attached to the inclined surface part (8a).

13. The vehicle-body structure according to claim 12, wherein
the inclined surface part (8a) is inclined upward toward a front side of the vehicle.

14. The vehicle-body structure according to claim 12 or 13, wherein
the front side frame (5) is joined to the inclined surface part (8a).

15. A vehicle body (1) or a vehicle comprising the vehicle-body structure according to any one of the preceding claims.
